# EUROPEAN PATENT SPECIFICATION

(11) **EP 0 517 023 B1**
(45) Date of publication and mention of the grant of the patent: **05.11.1997**
(21) Application number: 92108362.2
(22) Date of filing: 18.05.1992
(51) Int. Cl.: G01N 27/22, G01R 31/312

(54) **Isothermal capacitance transient spectroscopy**
Isothermische Kapazitätstransientspektroskopie
Spectroscopie à capacitance transitoire isotherme

(30) Priority: 01.06.1991 JP 157569/91
(43) Date of publication of application: 09.12.1992
(73) Proprietor: HORIBA, LTD., Minami-ku Kyoto (JP)
(72) Inventor: Yokoyama, Issei, Sakyo-ku, Kyoto (JP)
(74) Representative: Müller, Frithjof E., Dipl.-Ing.

(56) References cited:
- DE-A- 3 832 298
- US-E- 32 457
- JOURNAL OF APPLIED PHYSICS vol. 68, no. 12, 15 December 1990, NEW YORK pages 6526 - 6528; K. NG, I.-W. CHAO, C.E. HUNT, AND J.N. CHURCHILL: 'transient spectroscopy of deep levels in thin semiconductor films'
- APPLIED PHYSICS LETTERS vol. 65, no. 16, 16 October 1989, NEW YORK pages 1662 - 1664 C.C. WILLIAMS, J. SLINKMAN, W.P. HOUGH, H.K. WICKRAMASINGHE: 'lateral dopant profiling with 200 nm resolution by scanning capacitance micoscopy'
- PATENT ABSTRACTS OF JAPAN vol. 11, no. 253 (P-606)18 August 1987 & JP-A-62 059 852 ( SHIMADA PHYS&CHE IND CO )
- Dieter K.Schroder: "SEMICONDUCTOR MATERIAL AND DEVICE CHARACTERIZATION", John Wiley & Sons, Inc., NEW YORK, 1990
- P.M.Henry et al.:"Frequency scanned deep-level transient spectroscopy" in J.Appl.Phys, Vol.57, No.2, 15.Jan.1985
- H.Okushi."GAP STATES" in Glow-Discharge Hydrogenated Amorphous Silicon, edited by K.Tanaka, pp.149-185, KTK Scientific Publishers, Tokyo, 1989

## Description

### BACKGROUND OF THE INVENTION

### Field of the Invention

The present invention relates to a method of nondestructively measuring impurities, defects and the like in semiconductor wafers, semiconductor chips and the like in a short time.

### Description of the Prior Art

Semiconductor wafers, semiconductor chips and the like have been evaluated by measuring impurities, defects or the like contained therein. A method of measuring impurities and the like contained in semiconductors by the isothermal capacitance transient spectroscopy (ICTS) has been known as one of this measuring method.

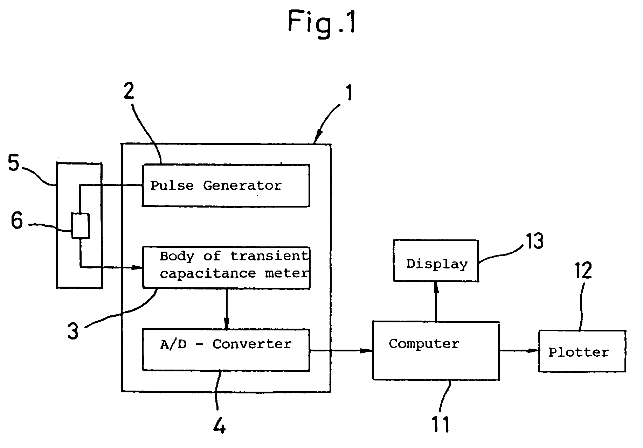

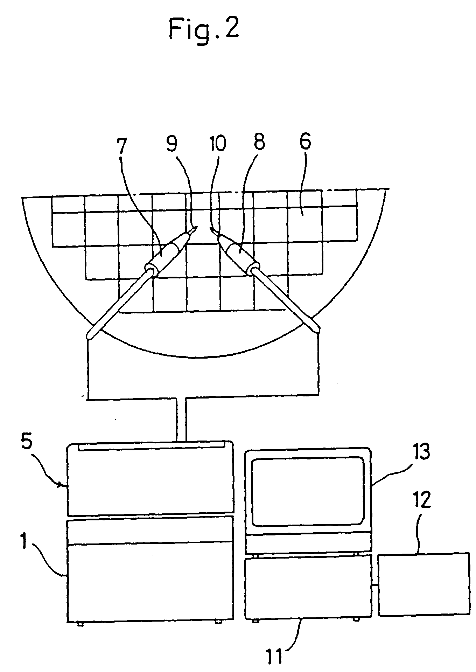

Referring to Figs. 1, 2, reference numeral 1 designates a transient capacitance meter provided with a pulse generator 2, a body of transient capacitance meter 3 and an AD convertor 4 therewithin. Reference numeral 5 designates a constant temperature baLh provided with a semiconductor sample 6 and a pair of probes 7, 8 connected with said transient capacitance meter 1 therewithin, said probes 7, 8 being provided with contact needles 9, 10 at pointed ends thereof, respectively. Reference numeral 11 designates a computer, reference numeral 12 designates a plotter, and reference numeral 13 designates a display.

In order to measure impurities and the like contained in said semiconductor sample 6 by the use of the transient capacitance meter 1, the respective pointed ends of said contact needles 9, 10 are brought into contact with a portion to be measured of the semiconductor sample 6 with an interval therebetween under the condition that the semiconductor sample 6 is held at an appointed constant. temperature, as shown in Fig. 2. to temporarily apply the semiconductor sample 6 with an appointed magnitude of pulse voltage generated by said pulse generator 2. Subsequently, a signal based on an electrostatic capacitance in said portion to be measured of the semiconductor sample 6 is put into said body of transient capacitance meter 3 to be subjected to the AD conversion followed by being operated in said computer 11, whereby measuring said impurities, defects and the like contained in the portion to be measured of the semiconductor sample 6.

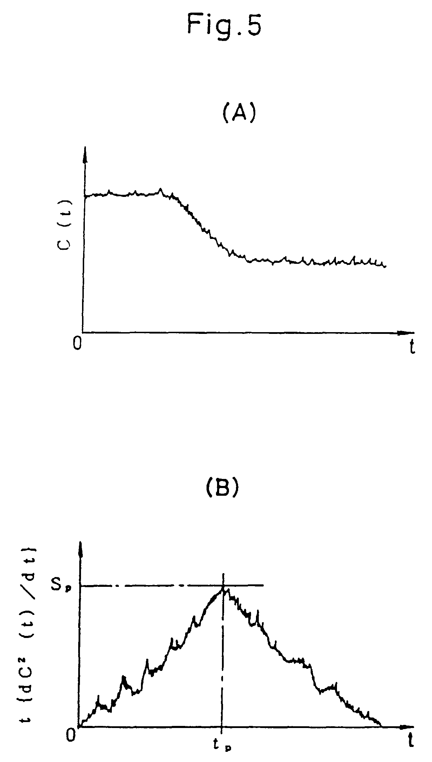

However, in the conventional isothermal capacitance transient spectroscopy, the ICTS spectrum S(t) has been defined as follows: That is to say, in the case where the capacitance transient waveform as shown in Fig. 5(A) is expressed by C(t), S(t) is expressed by the following expression (5):$\text{S (t) = t} \frac{{\text{dC}}^{\text{2}} \text{(t)}}{\text{dt}}$

In this case, C²(t), which is the square of said C(t), is expressed by the following expression (6):${\text{C}}^{\text{2}} {\text{(t) = C}}_{\text{0}} {\text{}}^{\text{2}} \text{{1 +} \frac{{\text{N}}_{\text{T}}}{{\text{N}}_{\text{D}}} \text{exp (-} \frac{\text{t}}{\text{τ}} \text{)}}$ wherein C₀ designates a stationary capacitance and N_{D} designates a concentration of impurities intendedly added.

And, a concentration of impurities N_{T} and a thermal emission time constant τ are calculated by the following expression (7) from a peak intensity Sₚ of ICTS spectrum and a peak time tₚ.${\text{N}}_{\text{T}} \text{=} \frac{{\text{2.72 N}}_{\text{D}}}{{\text{C}}_{\text{0}} {\text{}}^{\text{2}}} {\text{S}}_{\text{p}}$${\text{τ = t}}_{\text{p}}$

However, in the above described conventional isothermal capacitance transient spectroscopy, in the case where a capacitance-change is small as compared with a resolving power of the capacitance meter or external turbulent noises are generated, said noises are added to the C(t) and thus S(t), which is obtained by directly differentiating said C²(t), is violently fluctuated, as shown in Fig. 5(B). As a result, an accuracy of measurement of said concentration of impurities N_{T} and said thermal emission time constant τ has been spoiled or impurities of low concentration have not been able to detect according to circumstances.

A conventional ICTS method as described above is known from "Glow-Discharge Hydrogenated Amorphous Silicon", edited by K. Tanaka, pp. 149-185, KTK scientific publishers, Tokyo, 1989.

Further, another method of measuring impurities and the like contained in semiconductors by deep-level transient spectroscopy (DLTS) is known from D. K. Schroder: "Semiconductor Material and Device Characterization", 1990, pp. 246-257, 286-289, 297-340, in particular, pp. 325-328.

Performing the known lock-in amplifier DLTS method a capacitance transient waveform obtained from a transient capacitance experiment is multiplied by a weighting function, in particular, by a square wave weighting function. The resulting product is averaged in order to obtain a difference of capacitances at the sampling times tl and t2. These capacitance differences depend on the temperature of the semiconductor sample.

Using lock-in amplifier DLTS the period of the square wave weighting function which is set by the frequency of the lock-in amplifier is normally held constant. However, it is also possible to keep the temperature constant and vary the frequency to obtain the same trap information. This Latter isothermal method is detailed in P.M. Henry et al.: "Frequency-scanned DLST" in J. Appl. Phys. 57(2), Jan. 1985.

### SUMMARY OF THE INVENTION

The object of the present invention is to provide an isothermal capacitance transient spectroscopy method capable of surely detecting impurities of low concentration and thus achieving a highly accurate measurement.

This object is achieved by the ICTS method described in claim 1.

According to the present invention, in the case where the expression defined in claim 1 and 2, i. e. 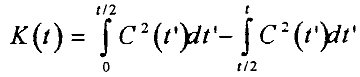 is used, the signal to noise ratio in this expression is improved, so that the ICTS spectrum is improved in signal to noise ratio 10 times or more. As a result, the accuracy of measurement of concentration of impurities and thermal emission time constant can be improved and thus impurities of low concentration 1/10 times or less as compared with that in the conventional method can be detected.

### BRIEF DESCRIPTION OF THE DRAWINGS

Fig. 1 is a block diagram roughly showing an apparatus for putting an isothermal capacitance transient spectroscopy according to the present invention into practice;
Fig. 2 is a diagram showing essential parts of said apparatus;
Fig. 3 is a diagram describing a method according to the present invention. in which
Fig. 3(A) is a diagram showing a capacitance transient waveform;
Fig. 3(B) is a diagram showing an integrated capacitance transient waveform; and
Fig. 3(C) shows the ICTS spectrum;
Fig. 4 is a diagram for describing an invariable fraction Cₙ; and
Fig. 5 is a diagram for describing the conventional method; in which
Fig. 5(A) is a diagram showing a capacitance transient waveform; and
Fig. 5(B) shows the ICTS spectrum.

### DETAILED DESCRIPTION OF THE PREFERRED EMBODIMENTS

The preferred embodiments of the present invention will be below described. According to a first preferred embodiment, in an isothermal capaciLance transient spectroscopy, in which a pulse voltage having an appointed magnitude is applied to a semiconductor sample held at a constant temperature to analyze a capacitance-change after that of said semiconductor sample, whereby measuring impurities and the Like contained in the semiconductor sample, an expression defined by the following expression (12) is used.

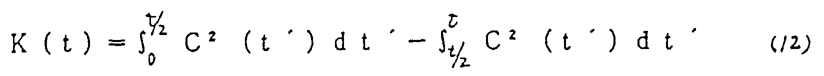

And, a differential coefficient obtained by differentiating K(t) defined by said expression (12) is used as the ICTS spectrum and this is expressed by the following expression (13):$\text{S (t) =} \frac{\text{d K ( t )}}{\text{d t}}$

In this case, the concentration of impurities N_{T} and the thermal emission time constant τ are expressed by the following expression (14) on the basis of said expression 6.${\text{N}}_{\text{T}} \text{=} \frac{{\text{4N}}_{\text{D}}}{{\text{C}}_{\text{0}} {\text{}}^{\text{2}}} {\text{S}}_{\text{p}}$${\text{τ = 0.721 t}}_{\text{p}}$

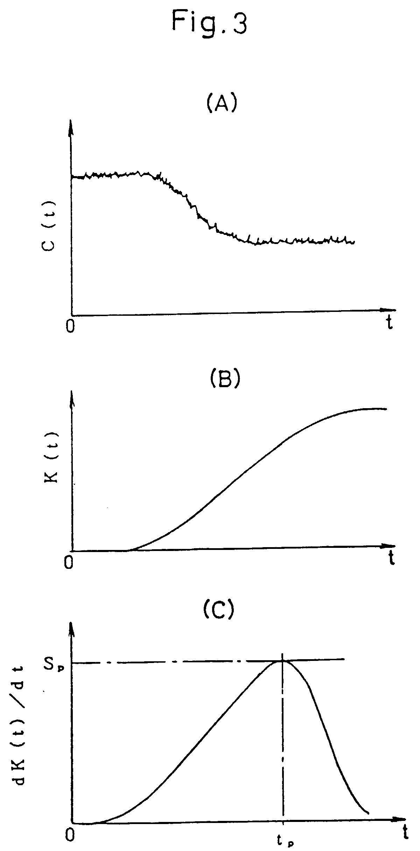

This will be below described with reference to Fig. 3. Provided that a capacitance transient waveform C(t) is as shown in Fig. 3(A), K(t) obtained according to said expression 12, that is an integrated capacitance transient waveform, is as shown in Fig. 3(B). As understood from Fig. 3(B), said integrated capacitance transient waveform K(t) is improved in S/N. And, this K(t) is differentiated to use the obtained differential coefficient as the ICTS spectrum. This ICTS spectrum has a waveform as shown in Fig. 3(C) and this ICTS spectrum is improved in S/N 10 times or more as compared with the above described conventional method. Accordingly, an accuracy of measurement of concentration of impurities and thermal emission time constant can be improved and thus impurities of low concentration 1/10 times or less as compared with that in the conventional method can be detected.

The present invention is not limited by the above described first preferred embodiment, that is a differential coefficient obtained by differentiating an expression defined by the following expression 15 may be used as the ICTS spectrum.

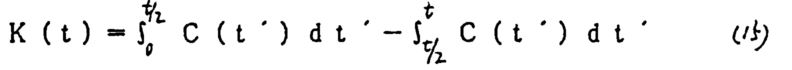

A concentration of impurities N_{T} and a thermal emission time constant τ in this second preferred embodiment are expressed by the following expression (16):${\text{N}}_{\text{T}} \text{=} \frac{{\text{8 N}}_{\text{D}}}{{\text{C}}_{\text{0}}} {\text{S}}_{\text{p}}$${\text{τ = 0.721 t}}_{\text{p}}$

In this second preferred embodiment, an expression approximate as compared with that in the above described first preferred embodiment is used, so that an accuracy is slightly inferior but the expression is comparatively simple arid thus an advantage occurs in that the calculation can be conducted also by an analog circuit.

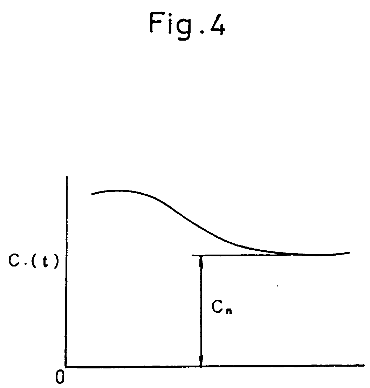

In addition, in the case where the capacitance transient waveform C(t) includes an invariable fraction Cₙ, as shown in Fig. 4, the following expression 17 may be used as K(t) in the above described first and second preferred embodiments. That is to say, a differential coefficient obtained by differentiating an expression defined by said expression 17 may be used as the ICTS spectrum.

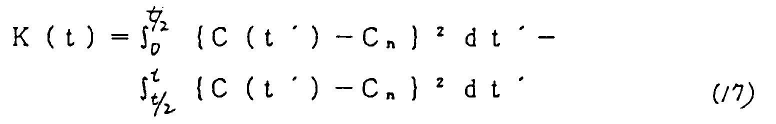

A concentration of impurities N_{T} and a thermal emission time constant τ in this third preferred embodiment are expressed by the following expression (18):${\text{N}}_{\text{T}} \text{=} \frac{{\text{4N}}_{\text{D}}}{{\text{C}}_{\text{0}} {\text{(C}}_{\text{0}} {\text{- C}}_{\text{n}} \text{)}} {\text{S}}_{\text{p}}$${\text{τ = 0.721 t}}_{\text{p}}$

In this third preferred embodiment, an effective number of figures in an operation by the computer is increased, so that there is the possibility that an accuracy of calculation is improved.

In addition, a differential coefficient obtained by differentiating an expression defined by the following expression (19) may be used as the ICTS spectrum.

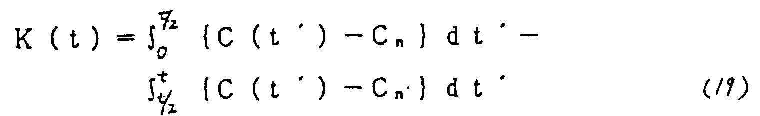

A concentration of impurities N_{T} and a thermal emission time constant τ in this fourth preferred embodiment are expressed by the following expression (20):${\text{N}}_{\text{T}} \text{=} \frac{{\text{8N}}_{\text{D}}}{{\text{C}}_{\text{0}}} {\text{S}}_{\text{p}}$${\text{τ = 0.721 t}}_{\text{p}}$

In this fourth preferred embodiment, an expression approximate as compared with that in the above described third preferred embodiment is used. so that an accuracy is slightly inferior but the expression is comparatively simple. so that the calculation can be conducted also by an an analog circuit and at the same time an effective number of figures in an operation by the computer is increased, so that there is the possibility that an accuracy of calculation is improved.

As above described, according to the present invention, the ICTS spectrum is improved in S/N 10 times or more as compared with the conventional method, so that an accuracy of measurement of concentration of impurities and thermal emission time constant can be improved and thus impurities of low concentration 1/10 times or less as compared with that in the conventional method can be detected.

## Claims

1. An isothermal capacitance transient spectroscopy (ICTS) method, in which
a pulse voltage having an appointed magnitude is applied to a semiconductor sample held at a constant temperature,
a transient capacitance of said semiconductor sample is measured after that to obtain a capacitance transient waveform C(t), and
a capacitance change is analyzed to measure impurities and the like contained in said semiconductor sample,
**characterized** in that
a differential coefficient $\frac{\text{dK} \text{(} \text{t} \text{)}}{\text{dt}}$ obtained by differentiating an expression K(t) defined by the following expression is used as an ICTS-spectrum *S(t):* 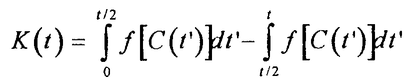 With:
*t* = measuring time,
*t'* = time variable,
*f* = function symbol.

2. The method as claimed in claim 1, **characterized in that** the function f[C(t')] is equal to C²(t'),

3. The method as claimed in claim 1, **characterized in that** the function f[C(t')] is equal to C(t').

4. The method as claimed in claim 1, **characterized in that** the function f[C(t')] is equal to {C(t') - Cn}², whereas Cn is an invarialble fraction of the capacitance transient waveform.

5. The method as claimed in claim 1, **characterized in that** the function f[C(t')] is equal to {C(t') - Cn}, whereas Cn is an invariable fraction of the capacitance transient waveform.

## Patentansprüche

1. Verfahren zur isothermischen Kapazitätstransientenspektroskopie (ICTS = isothermal capacitance transient spectroscopy), bei dem
- eine Impulsspannung mit vorgegebener Größe an eine Halbleiterprobe gegeben wird, die auf konstanter Temperatur gehalten wird;
- danach der Kapazitätsverlauf der Halbleiterprobe gemessen wird, um den Signalverlauf des einschwingenden Kapazitätswerts C(t) zu erhalten; und
- die Kapazitätsänderung analysiert wird, um Fremdstoffe und dergleichen zu messen, wie sie in der Halbleiterprobe enthalten sind;
**dadurch gekennzeichnet, dass** ein Differentialkoeffizient dK(t)/dt, wie er durch Differenzieren eines durch die folgende Gleichung definierten Ausdrucks K(t) erhalten wird, als ICTS-Spektrum S(t) verwendet wird: 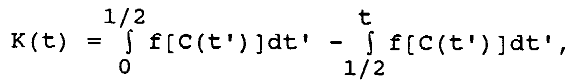 mit:
t = Messzeit,
t' = Zeitvariable,
f = Funktionssymbol.

2. Verfahren nach Anspruch 1, **dadurch gekennzeichnet, dass** die Funktion f[C(t')] der Funktion C²(t') entspricht.

3. Verfahren nach Anspruch 1, **dadurch gekennzeichnet, dass** die Funktion f[C(t')] der Funktion C(t') entspricht.

4. Verfahren nach Anspruch 1, **dadurch gekennzeichnet, dass** die Funktion f[C(t')] der Funktion {C(t') · Cn}² entspricht, wobei Cn ein unveränderlicher Bruchteil des Signalverlaufs der einschwingenden Kapazität ist.

5. Verfahren nach Anspruch 1, **dadurch gekennzeichnet, dass** die Funktion f[C(t')] der Funktion {C(t') · Cn} entspricht, wobei Cn ein unveränderlicher Bruchteil des Signalverlaufs der einschwingenden Kapazität ist.

## Revendications

1. Procédé de spectroscopie transitoire à capacité isothermique (ICTS), dans lequel :
une tension d'impulsions ayant une valeur prescrite est appliquée à un échantillon semiconducteur maintenu à une température constante,
une capacité transitoire dudit échantillon semiconducteur est mesurée après cela afin d'obtenir une forme d'onde transitoire de capacité C(t), et
un changement de capacité est analysé pour mesurer des impuretés, et analogues, contenues dans ledit échantillon semiconducteur,
caractérisé en ce que :
un coefficient différentiel $\frac{\text{dK(t)}}{\text{dt}}$ obtenu en différenciant une expression *K(t)* définie par l'expression suivante est utilisé comme spectre de spectroscopie transitoire à capacité isothermique *S(t) :* 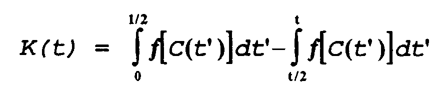 avec :
*t* = temps de mesure,
*t'* = variable de temps,
*f* = symbole de fonction.

2. Procédé selon la revendication 1, caractérisé en ce que la fonction *f*[C(t')] est égale à C²(t').

3. Procédé selon la revendication 1, caractérisé en ce que la fonction *f*[C(t')] est égale à C(t').

4. Procédé selon la revendication 1, caractérisé en ce que la fonction *f*[C(t')] est égale à {C(t'). Cn}², Cn étant une fraction invariable de la forme d'onde transitoire de capacité.

5. Procédé selon la revendication 1, caractérisé en ce que la fonction *f*[C(t')] est égale à {C(t') - Cn}, Cn étant une fraction invariable de la forme d'onde transitoire de capacité.
